# EUROPÄISCHE PATENTSCHRIFT

(11) **EP 2 126 301 B1**
(45) Veröffentlichungstag und Bekanntmachung des Hinweises auf die Patenterteilung: **15.09.2010**
(21) Anmeldenummer: 07822645.3
(22) Anmeldetag: 15.11.2007
(51) Int. Cl.: F01N 3/20, B01D 53/94

(54) **FÖRDERMODUL FÜR SELEKTIVE KATALYTISCHE REDUKTION**
DELIVERY MODULE FOR SELECTIVE CATALYTIC REDUCTION
MODULE DE TRANSFERT POUR UNE RÉDUCTION CATALYTIQUE SÉLECTIVE

(30) Priorität: 28.12.2006 DE 102006061736
(43) Veröffentlichungstag der Anmeldung: 02.12.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/062413
(87) Internationale Veröffentlichungsnummer: WO 2008/080690

(56) Entgegenhaltungen:
- EP-A- 1 435 458
- DE-A1- 10 359 522
- FR-A- 2 880 064

## Beschreibung

### Stand der Technik

Bei Kraftfahrzeugen mit Verbrennungskraftmaschinen ist aufgrund der in den nächsten Jahren zu erwartenden verschärften Abgasgesetzgebung der im Abgas von Verbrennungskraftmaschinen enthaltene Schadstoff NOx zu reduzieren. Eine dazu derzeit eingesetzte Methode ist das SCR-Verfahren (selektive katalytische Reduktion), bei dem der Schadstoff NOx unter Einsatz fl-üssiger Reduktionsmittel zu N₂ oder H₂O reduziert wird. Dabei ist das eingesetzte, in der Regel in flüssiger Form vorliegende Reduktionsmittel in einem Tank aufgenommen und wird von einem Fördermodul über eine Leitung vom Tank zu einem Dosiermodul zur Eindüsung des Reduktionsmittels in das Abgas befördert. Dabei wird angestrebt, das Dosiersystem mit seinen Komponenten Tankfördermodulleitungen, Dosiermodul und dergleichen, außerhalb des Fahrgastinnenraums des Kraftfahrzeuges zu positionieren, da sich aus der als Reduktionsmittel eingesetzten wässrigen Harnstofflösung bei höheren Temperaturen Ammoniak (NH₃) bildet. Mit diesem Konzept der Unterbringung des das Reduktionsmittel führenden gesamten Dosiersystems außerhalb des Fahrgastinnenraumes ist gewährleistet, dass bei Undichtheiten im das Reduktionsmittel führenden Dosiersystem oder im Falle eines Unfalls keine NH₃-Bildung im Fahrgastraum entstehen kann. An das Fördermodul, welches Komponenten wie z. B. Drucksensor, Pumpe, Spülventil, Filter, Heizung, Kontaktierung der Komponenten und dergleichen umfasst, werden hohe Anforderungen hinsichtlich einer Spritzwassertauglichkeit und Watfähigkeit sowie insbesondere Korrosionsbeständigkeit gestellt. Da die das Reduktionsmittel führenden Komponenten des Dosiersystems außerhalb des Fahrgastinnenraumes angeordnet werden, sind sie Temperaturschwankungen, Spritzwassereinflüssen sowie Streusalzeinwirkungen in größerem Maße ausgesetzt, im Gegensatz zu einer Anordnung der genannten Komponenten im Fahrgastinnenraum.

Diesen Anforderungen an die Spritzwassertauglichkeit, Watfähigkeit sowie Korrosionsbeständigkeit wird bei bisher eingesetzten Systemen dadurch Rechnung getragen, dass die Komponenten des gesamten Dosiersystems, so die oben erwähnten Komponenten Tankfördermodul, Leitungen, Dosiermodul, in einem separaten Gehäuse untergebracht werden. Ein interner Kabelbaum verbindet die einzelnen Komponenten mit einem an diesem Gehäuse angebrachten Zentralstecker, über den die Kontaktierung an den Außenbereich übergeben wird. Die innerhalb des Gehäuses untergebrachten Komponenten sind über beheizbare Schläuche hydraulisch miteinander verbunden. Diese beheizbaren Schläuche enden an einem Zu- und Ablaufstück am Gehäuse und werden so an die Schlauchanschlüsse außerhalb des gemeinsamen Gehäuses übergeben. Nach der Montage der Komponenten innerhalb dieses Gehäuses wird das Gehäuse über einen separaten Deckel mit seinen Komponenten gegen die Umgebung dichtend verschlossen. Gemäß einem anderen Lösungskonzept sind alle Komponenten des Fördermoduls für das das Reduktionsmittel führende System als Einzelkomponenten bereits spritzwassertauglich und watfähig ausgebildet. Die Einzelkomponenten werden auf eine Platine oder eine Trägerplatte oder dergleichen montiert und an einer Schnittstelle zwischen Komponente und Platte durch Abdichtungen abgedichtet. Die hydraulische Verbindung der Komponenten erfolgt innerhalb einer Platte beziehungsweise eines Trägerblockes (Platine). Jede einzelne spritzwassertauglich und watfähig ausgelegte Komponente hat ihre eigene Kontaktierung. Des Weiteren ist eine Heizung mit der Platte verbunden.

Die eingangs zuerst geschilderte Lösung baut relativ groß, da die einzelnen Komponenten in einem gemeinsamen Gehäuse untergebracht werden. Aufgrund der hydraulischen Verbindung der Komponenten über Schläuche miteinander sowie der elektrischen Ansteuerung jeder einzelnen der Komponenten über einen Kabelbaum zu einem Zentralstecker ist das gemeinsame Gehäuse gemäß der eingangs skizzierten ersten Lösung äußerst kosten- und baumraumintensiv. Neben den im gemeinsamen Gehäuse untergebrachten Komponenten benötigen auch die hydraulischen Leitungen jeweils Heizungen, die sich negativ hinsichtlich der Kosten und des Bauraumes auswirken und die im Einzelfall mit dem Automobilhersteller hinsichtlich der erforderlichen Spezifikationen abzunehmen sind. Die andere Ausführungsform setzt voraus, dass jede der Einzelkomponenten die an eine außerhalb des Fahrzeuginnenraums montierte Komponente gestellten Anforderungen hinsichtlich Spritzwassertauglichkeit, Watfähigkeit oder Korrosionsbeständigkeit für sich gesehen erfüllt. Dies kann äußerst aufwändig sein, da bei den SCR-Verfahren die Komponenten teilweise über Hebel, so z. B. beim Umschaltventil für die Pumpe oder bei einem Exzenterantrieb von einem Betätigungsmagneten beziehungsweise einem Elektroantrieb, betätigt werden. Es handelt sich nicht um kompakte, rotationssymmetrisch ausgebildete Einzelkomponenten, die unabhängig voneinander arbeiten, sondern vielmehr um Komponenten, die miteinander auf vielfältige Weise in Eingriff stehen. Damit ist eine komponenteneigene Abdichtung, die gemäß der zweiten aus dem Stand der Technik bekannten bisher gewählten Ausführungsform erforderlich ist, äußerst schwierig. Des Weiteren gestaltet sich eine Beheizung der außerhalb an einem gemeinsamen Trägerblock untergebrachten und dort aufgenommenen Komponenten eines SCR-Systems als äußerst schwierig, insbesondere, was den Wärmetransport von einer Heizquelle zu den einzelnen, an einem gemeinsamen Trägerblock aufgenommenen Komponenten betrifft.

Die EP 1435458 beschreibt ein Dosierpumpenaggregat mit einer Vormischeinrichtung.

### Offenbarung der Erfindung

Erfindungsgemäß wird vorgeschlagen, eine Komponente des Dosiersystems zur Einbringung eines Reduktionsmittels in das Abgas einer Verbrennungskraftmaschine als Hauptkomponente derart auszubilden, dass weitere Komponenten in die ausgewählte Hauptkomponente einschubartig oder modulartig integrierbar sind, so dass eine kompaktbauende Gesamteinheit erhalten wird. In der Praxis kann z. B. ein Umschaltventil, bei dem es sich beispielsweise um ein 4/2-Ventil handeln kann, als Hauptkomponente ausgewählt werden, in deren Gehäuse gleichzeitig Einschubfächer oder Einschubräume für die übrigen Komponenten, z. B. eines Fördermoduls des Dosiersystems, zur Einbringung eines Reduktionsmittels in das Abgas einer Verbrennungskraftmaschine ausgebildet werden können. Erfindungsgemäß wird vorgeschlagen, das Gehäuse der ausgewählten Hauptkomponente mit mehreren Einschüben zu versehen. Da das Gehäuse der Hauptkomponente in kostengünstiger Weise und einen hohen gestalterischen Freiheitsgrad bietend im Wege des Kunststoffspritzgussverfahrens gefertigt wird, lassen sich die für die Einschübe erforderlichen Räume relativ einfach aus Kunststoff fertigen. In diese Einschübe des Gehäuses der Hauptkomponente lassen sich weitere Komponenten, wie zum Beispiel ein Drucksensor und mindestens ein druckseitiger Filter einfach einfügen. Nach Einbau der betreffenden Komponente in den jeweils für diese vorgesehenen Einschub im Gehäuse der Hauptkomponente können einzelne Kammern über separate Kunststoffdeckel verschlossen werden. Das Verschließen der einzelnen Kammern über separate Kunststoffdeckel kann z. B. über die Befestigung eines Deckels am Einschub mittels einer Clipsverbindung, einer Schraubverbindung oder durch Ausbildung einer stoffschlüssigen Verbindung, so z. B. im Wege des Kunststoffreibschweißens, erfolgen.

Je nach gefordertem Dichtheitsgrad der einzelnen Kammern, was abhängig von der darin untergebrachten Komponente ist, können als Abdichtung zwischen Kammer und Deckel Elastomerdichtungen eingelassen werden. Elastomerdichtungen können z. B. entfallen, wenn eine stoffschlüssige Verbindung entlang der Öffnung der den Einschub aufnehmenden Kammer im Gehäuse der Hauptkomponente und im mit diese verschließenden Deckel erzeugt wird. Die elektrische Ansteuerung einer Komponente, die jeweils in ihrer betreffenden Kammer im Gehäuse der Hauptkomponente untergebracht ist, kann z. B. über einen auf dem Deckel angespritzten Steckeranschluss erfolgen. Eine Kontaktierung der Komponente zum Stecker kann über eine auf die jeweilig elektrisch zu kontaktierende Komponente steckbare Litzenverbindung zwischen Komponente und Stecker erfolgen. Gegebenenfalls kann das auf den Deckel aufgespritzte Steckergehäuse mit Öffnungen versehen sein. Weist die jeweils elektrisch zu kontaktierende Komponente Steckerfahnen auf, kann der Stecker beim Komplettieren von Komponente und Deckel beim Zusammenbau von innen durch die Öffnungen in den inneren Steckerbereich ragen und somit einen fördermodulseitigen elektrischen Stecker komplettieren.

In vorteilhafter Weise kann in das bevorzugt im Wege des Kunststoffspritzgießverfahrens hergestellte Gehäuse der Hauptkomponente, in welchem die verschiedenen Kammern zur Aufnahme der Einschübe beziehungsweise der Komponenten ausgebildet sind, eine Heizung eingespritzt werden. Wird diese Heizung unmittelbar in das Kunststoffgehäuse eingespritzt, so kann im Gegensatz zu einer verschraubten Heizung, die maximal an einer Stelle aufliegt und somit Wärme über diese eine Seite im Wege der Wärmeleitung übertragen kann, ein erheblich verbesserter Wärmeeintrag in die im Gehäuse der Hauptkomponenten untergebrachten Einschübe, d. h. die dort integrierten Komponenten, erreicht werden.

### Zeichnung

Anhand der Zeichnung wird die Erfindung nachstehend eingehender beschrieben.

Es zeigt:
- Figur 1: eine Ausführungsform gemäß des Standes der Technik, bei dem die Kompo- nenten des Fördermoduls eines Dosiersystems in einem gemeinsamen, nach außen abgedichteten und elektrisch kontaktierten Gehäuse untergebracht sind,
- Figur 2: eine weitere Ausführungsform gemäß des Standes der Technik, bei dem ein- zelne, jeweilige Exterieuranforderungen erfüllende Komponenten an einem gemeinsamen Trägerblock aufgenommen sind, und
- Figur 3: ein erfindungsgemäß vorgeschlagenes Fördermodul für ein Dosiersystem zum Eintrag eines Reduktionsmittels, bei dem im Gehäuse einer Hauptkomponente mehrere weitere Komponenten des Fördermoduls eines Dosiersystems unter- gebracht sind.

### Ausführungsformen

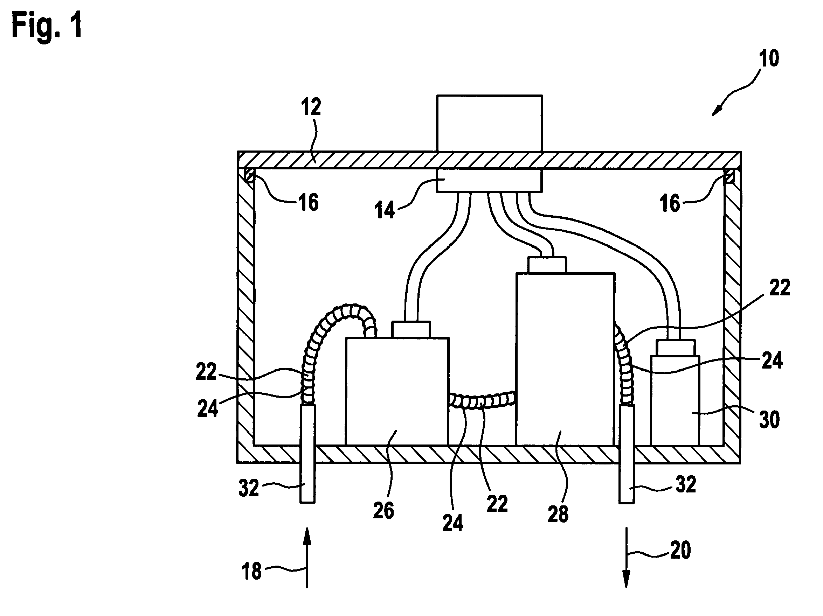

Der Darstellung gemäß Figur 1 ist eine erste Ausführungsform eines Fördermoduls gemäß des Standes der Technik zu entnehmen, bei dem die Komponenten eines Fördermoduls eines Dosiersystems in ein gemeinsames, nach außen abgedichtetes Gehäuse integriert sind.

Der Darstellung gemäß Figur 1 ist entnehmbar, dass innerhalb eines Zentralgehäuses 10 mehrere Komponenten 26, 28, 30 eines Fördermoduls zur Förderung eines Reduktionsmittels innerhalb eines Dosiersystems angeordnet sind. In der Darstellung gemäß Figur 1 sind die erste Komponente 26, die zweite Komponente 28 sowie die dritte Komponente 30 auf dem Boden des Zentralgehäuses 10 befestigt. Das Zentralgehäuse 10 ist durch einen Deckel 12 verschlossen, der mittels einer umlaufenden Dichtung 16 abgedichtet ist. In den Deckel 12 ist ein Zentralstecker mit einem Kabelbaum 14 integriert, über den die einzelnen Komponenten 26, 28, 30 innerhalb des Zentralgehäuses 10 elektrisch kontaktiert werden. Ein Zulauf 18 erstreckt sich durch den Boden des Zentralgehäuses 10 in dieses, über einen Rücklauf 20 verlässt das Reduktionsmittel das Zentralgehäuse 10. Sowohl Zulauf 18 als auch Rücklauf 20 weisen jeweils ein Anschlussstück 32 auf. Die einzelnen Komponenten 26, 28, 30, die innerhalb des Zentralgehäuses 10 angeordnet sind, sind untereinander durch Hydraulikschläuche 22 verbunden, über welche das Reduktionsmittel über den Zulauf 18 in die erste Komponente 26 und von dieser in die zweite Komponente 28 gelangt, an welche der Rücklauf 20 über das Anschlussstück 32 angeschlossen ist. Die Hydraulikschläuche 22 sind jeweils von einer wendelförmig ausgebildeten Heizwendel 24 umschlossen, die eine relativ hohe Heizleistung erfordern. Die in Figur 1 dargestellte Lösung baut relativ groß, da die Komponenten 26, 28, 30 insgesamt in dem Zentralgehäuse 10 untergebracht werden. Aufgrund der hydraulischen Verbindung der Komponenten 26, 28, 30 über Hydraulikschläuche 22 und die elektrische Ansteuerung der Komponenten mittels des Kabelbaumes 14 am Deckel 12 ist diese Lösung äußerst kosten- und bauraumintensiv. Die Hydraulikschläuche 22 sowie die einzelnen Komponenten 26, 28, 30 benötigen jeweils Heizungen, die in Bezug auf die Hydraulikschläuche 22 durch die Heizwendeln 24 gebildet werden können. Für die Komponenten 26, 28, 30 sind jeweils separate Heizelemente erforderlich.

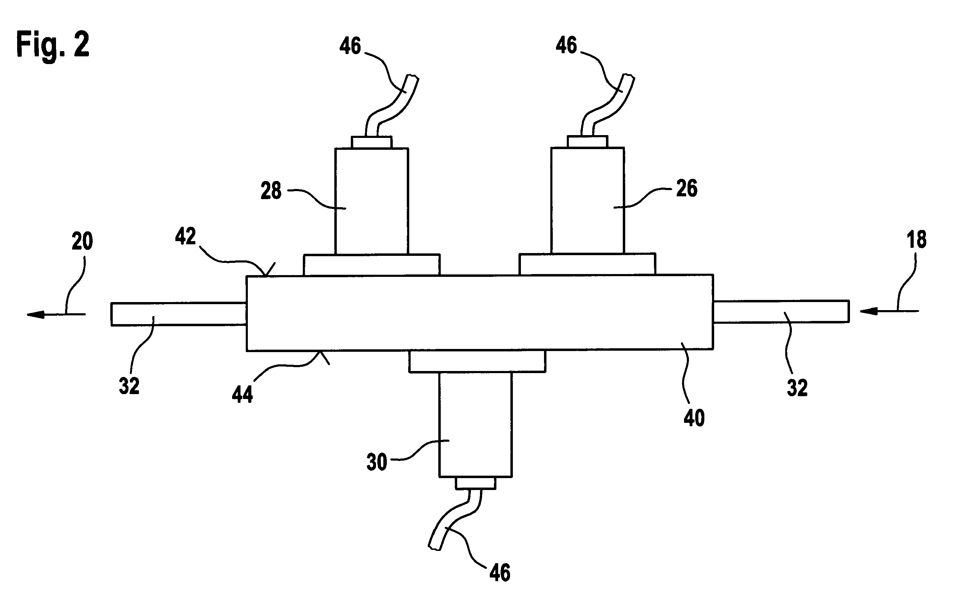

Figur 2 zeigt eine Ausführungsform, bei der die einzelnen Komponenten für sich genommen die Exterieuranforderungen erfüllen und an einem Trägerblock aufgenommen sind.

Der Darstellung gemäß Figur 2 ist entnehmbar, dass ein Trägerblock 40 jeweils ein Anschlussstück 32 für einen Zulauf 18 und einen Rücklauf 20 eines Reduktionsmittels aufweist. Der Trägerblock 40 umfasst eine erste Seite 42, an der die erste Komponente 26 und die zweite Komponente 28 des Fördermoduls für ein Reduktionsmittel aufgenommen sind, während sich an der zweiten Seite 44 des Trägerblockes 40 die dritte Komponente 30 befindet. Gemäß dieser Lösung ist jede der an den Seiten 42, 44 des Trägerblockes 40 zugeordnete Komponente 26, 28, 30 für sich genommen spritzwassertauglich, watfähig und von guter Korrosionsbeständigkeit, d. h. erfüllt die Anforderungen, die im Allgemeinen als "Exterieuranforderungen" zusammengefasst bezeichnet werden. Daneben ist festzuhalten, dass die in Figur 2 dargestellten Komponenten 26, 28, 30 über elektrische Kontaktierungen 46 mit dem Bordnetz des Kraftfahrzeugs verbunden sind.

Die in Figur 2 dargestellte Ausführungsform setzt einerseits voraus, dass jede der eingesetzten Komponenten 26, 28 und 30 die Exterieuranforderungen für sich erfüllt. Dies kann jedoch in der Praxis Probleme aufwerfen, da bei SCR-Dosiersystemen die Komponenten teilweise über Hebel (z. B. Umschaltventil für Pumpen oder Exzenter) von einem Betätigungsmagneten oder einem Elektromotor betätigt werden. Es handelt sich demnach nicht um kompakte, rotationssymmetrische Einzelkomponenten, die unabhängig voneinander arbeiten, sondern vielmehr um Komponenten 26, 28, 30, die miteinander in Eingriff stehen. Des Weiteren ist eine komponenteneigene Abdichtung gegen Spritz- und Watwasser äuβerst schwierig und treibt die Kosten in die Höhe. Ferner stellt sich die Beheizung der einzelnen Komponenten als äußerst schwierig dar, da der Wärmetransport durch den Trägerblock 40 von diesem nur einseitig auf die jeweiligen an den Seiten 42 und 44 angeordneten Komponenten 26, 28, 30 erfolgen kann und viel Wärme zwangsläufig in die Umgebung verloren geht.

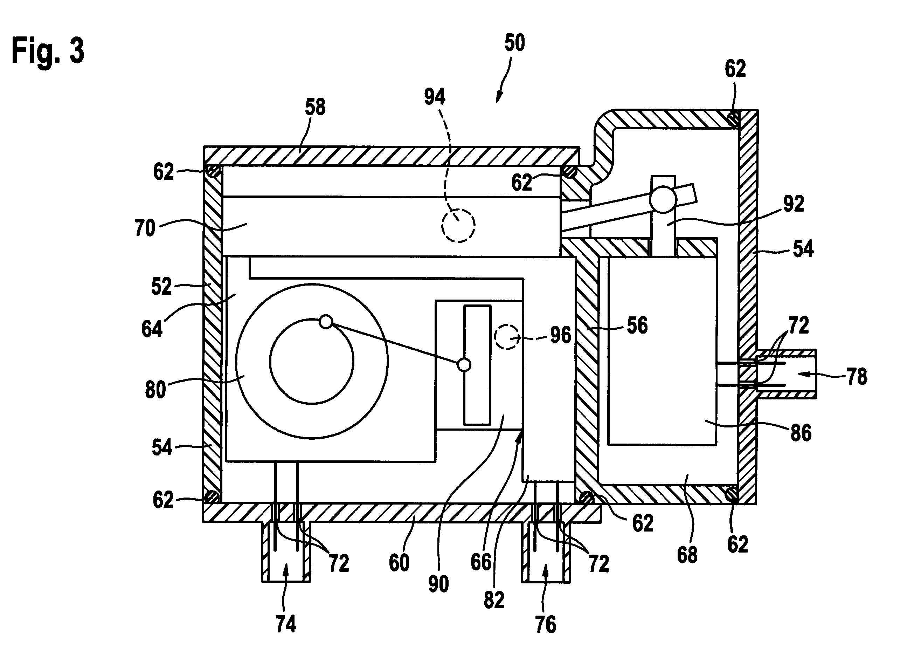

Der Darstellung gemäß Figur 3 ist ein erfindungsgemäß gestaltetes Fördermodul zu entnehmen, in welches einzelne Komponenten in Einschüben oder Kammern integriert sind.

Der Darstellung gemäß Figur 3 lässt sich entnehmen, dass eine Hauptkomponente 50 des Fördermoduls ein Kunststoffgehäuse 52 umfasst. Das Kunststoffgehäuse 52 der Hauptkomponente wird in der Regel als Spritzgussbauteil dargestellt und kann z. B. aus einem Aluminiumspritzgussverfahren oder auch in Kunststoffspritzgussverfahren hergestellt sein, was eine hohe gestalterische Freiheit hinsichtlich der Geometrie und der Unterteilung des Gehäuses 52 in einzelne Kammern beziehungsweise Einschübe gestattet. Das in Figur 3 im Schnitt dargestellte Gehäuse 52, bei dem es sich bevorzugt um ein im Wege des Kunststoffspritzgießverfahrens hergestelltes Gehäuse handelt, umfasst Gehäuseaußenwände 54, mindestens eine Innenwand 56, einen vom Gehäuse 52 entnehmbaren Deckel sowie eine mit Bezugszeichen 60 bezeichnete Bodenfläche.

Das in der Darstellung gemäß Figur 3 gezeigte Fördermodul 50 stellt eine ausgewählte Hauptkomponente eines Dosiersystems zum Eintrag eines Reduktionsmittels in den Abgastrakt einer Verbrennungskraftmaschine dar. Das hier beispielhaft herausgegriffene 4/2-Ventil dient als Umschaltventil 70, in dessen Gehäuse 52 die nachfolgend noch eingehender beschriebenen Komponenten modulartig integriert werden. Das Gehäuse 52, in dem das Umschaltventil 70 untergebracht ist, bildet, der erfindungsgemäß vorgeschlagenen Lösung folgend, gleichzeitig das Gehäuse für die übrigen Komponenten des Fördermoduls 50. Das Fördermodul 50 umfasst weitere Komponenten wie zum Beispiel mindestens einen Drucksensor sowie einen druckseitig angeordneten Filter zur Filterung des Reduktionsmittels. Über den druckseitig vorgesehenen Filter wird gewährleistet, dass in den Abgastrakt der Verbrennungskraftmaschine nur partikelfreies Reduktionsmittel eindosiert wird.

Das Fördermodul 50 stellt wiederum eine Komponente eines Dosiersystems dar, welches neben dem Fördermodul 50 ein Dosiermodul umfasst, in welchem ein im Zusammenhang mit der vorliegenden Erfindung nicht mehr dargestelltes Dosierventil untergebracht wird.

Aus der Darstellung gemäß Figur 3 geht hervor, dass z. B. die Bodenfläche 60 der ausgewählten Hauptkomponente Fördermodul 50 eine Abdichtung 62 aufweist, über welche die auf die Bodenfläche 60 aufgesetzten Gehäuseaußenwände 54 abgedichtet werden. Im Gehäuse 52 der ausgewählten Hauptkomponente Fördermodul 50 ist eine erste Kammer 64, die auch als Einschub bezeichnet werden kann, ausgebildet. Des Weiteren befindet sich innerhalb des Gehäuses 52, welches bevorzugt im Wege des Kunststoffspritzgießverfahrens hergestellt ist, eine zweite Kammer 66, die der Aufnahme einer Heizung 82 dient. Schließlich ist der Darstellung gemäß Figur 3 entnehmbar, dass eine dritte Kammer 68 durch eine Innenwand 56 von der ersten Kammer 64 getrennt ist. Die Kammern 64, 66, 68, die auch als Einschübe bezeichnet werden können, stellen separate Aufnahmeräume für die im Gehäuse 52 der ausgewählten Hauptkomponente Fördermodul 50 unterzubringenden weiteren Komponenten dar. Bei diesen weiteren Komponenten handelt es sich z. B. um einen Antrieb 80, bei dem es sich in der Regel um einen elektrischen Antrieb handelt, die bereits erwähnte Heizung 82 sowie einen Betätigungsmagneten 86 sowie eine Pumpe 90.

Des Weiteren sind im Fördermodul 50 die im Zusammenhang mit der Darstellung gemäß Figur 3 nicht näher dargestellten Komponenten Drucksensor sowie druckseitiges Filter untergebracht. Diese können analog zu den bereits aufgezählten Komponenten Antrieb 80, Heizung 82, Betätigungsmagnet 86 sowie Pumpe 90 in separaten Kammern des Gehäuses 52 des Fördermoduls 50 untergebracht sein.

Bei dem in Figur 3 im Schnitt dargestellten, vorzugsweise im Wege des Kunststoffspritzgießverfahrens hergestellten Gehäuse 52 kann die Heizung 82 entweder in die separat im Innenraum des Gehäuses 52 ausgebildete zweite Kammer 66 eingebracht werden oder bereits bei der Herstellung des Gehäuses 52 in das Gehäuse eingespritzt werden. Beide Ausführungsmöglichkeiten sind möglich. Die Anordnung der Heizung 82 im Zentrum des Hohlraums des Gehäuses 52 - wie in Figur 3 angedeutet - bietet die Möglichkeit, dass die von der Heizung 82 erzeugte Wärme gleichmäßig im Wege der Wärmeleitung oder auch durch Konvektion an die im Innenraum des Gehäuses in den verschiedenen Kammern 64, 66 und 68 angeordneten Komponenten Antrieb 80, Betätigungsmagnet 86 beziehungsweise Pumpe 90 übertragen werden kann, ohne dass es separater Leitungen bedürfte. Die erfindungsgemäß vorgeschlagene Lösung bietet den Vorteil, dass bei geeigneter Anordnung und geeigneter Konfiguration der Heizung 82 und deren Anlage an das Umschaltventil 70 beziehungsweise die Innenwand 56 eine sehr gute, gleichmäßig wirksame Beheizung des Gehäuses 52 erreicht werden kann. Während bei der Heizung 82, wie in Figur 3 dargestellt, ein Wärmeübergang aufgrund von Wärmeleitung zwischen dem Schenkel der Heizung 82 und dem Gehäuse des Umschaltventils 70 erfolgt sowie ein Wärmetransport im Wege der Wärmeleitung vom um 90° abgebogenen Schenkel der Heizung 82 über die Innenwand 56 an den in der dritten Kammer 68 angeordneten Betätigungsmagneten 86 erfolgt, stellt sich eine Wärmeübertragung im Wege der Konvektion von der Oberseite des um 90° abgebogenen Schenkels zur Pumpe 90 beziehungsweise zum in der ersten Kammer 64 aufgenommenen Antrieb 80 ein.

Die in der Darstellung gemäß Figur 3 angedeuteten Kammern 64, 66, 68 können z. B. durch Deckelelemente verschlossen werden. Die Deckelelemente können entweder über stoffschlüssige Verbindung nach Einbringen der jeweiligen Komponenten 80, 90, 86 beziehungsweise 70 in die dafür vorgesehenen Kammern beziehungsweise Einschübe 64, 66, 68 im Innenraum des Gehäuses 52 stoffschlüssig mit dem Gehäuse 52 verbunden werden, so dass die in den einzelnen Kammern 64, 66, 68 angeordneten Komponenten gegen Umgebungseinflüsse wie Spritzwasser, Salz, Schmutz etc. abgedichtet sind, d. h. die an sie gestellten "Exterieuranforderungen" samt und sonders erfüllen. Eine Befestigung der die Kammern 64, 66, 68 verschließenden Deckel kann daneben über Clipsverbindungen oder Schraubverbindungen oder dergleichen erfolgen. Je nach gefordertem Dichtheitsgrad der einzelnen Kammern 64, 66, 68 gegen äußere Umwelteinflüsse können auch Elastomerdichtungen (vergleiche Bezugszeichen 62) eingesetzt werden. Die elektrische Ansteuerung z. B. des Betätigungsmagneten 86 oder des Antriebes 80 kann sowohl über im jeweiligen die Kammern 64 beziehungsweise 68 verschließenden Deckel ausgebildete Steckkontakte erfolgen oder auch - wie in Figur 3 dargestellt - über Steckerfahnen, welche Öffnungen 72 in der Bodenfläche 60 beziehungsweise einer Gehäuseaußenwand 54 durchsetzen. Idealerweise münden die Steckerfahnen z. B. des Antriebes 80, der Heizung 82 oder auch des Betätigungsmagneten 86 nach Durchdringen der Öffnungen 72 in der Bodenfläche 60 beziehungsweise der Gehäuseaußenwand 54 in Steckermodulen, über welche die jeweiligen elektrisch zu kontaktierenden Komponenten 80, 82 und 86 elektrisch kontaktiert werden können. Die Steckfahnen der elektrisch zu kontaktierenden Komponenten 80, 86 und 90, um diese Beispiele zu nennen, erstrecken sich von der Innenseite des Gehäuses 52 her durch die Gehäuseöffnungen 72 in der Gehäuseaußenwand 74 beziehungsweise der Bodenfläche 60 in entsprechende Steckkontakte, an welchen das Gehäuse 52 des als Hauptkomponente ausgewählten, als 4/2-Ventil beschaffenen Umschaltventils 70 ausgebildet ist.

Der Vollständigkeit halber sei erwähnt, dass das Gehäuse 52 des als 4/2-Ventil ausgebildeten Umschaltventils 70 mit der ersten Kammer 64, der zweiten Kammer 66 und der dritten Kammer 68 Aufnahmeräume für die Komponenten 80, 82 sowie 86 und 90 bietet. Der Betätigungsmagnet 86 wird ebenfalls über sich durch Gehäuseöffnungen 72 in der Gehäusewand 74 erstreckende Steckerfahnen elektrisch kontaktiert und weist einen Stößel 92 auf. Der Stößel 92 ist drehbar mit einem Hebel 84 verbunden, über den wiederum das Umschaltventil 70, welches z. B. als 4/2-Ventil ausgelegt sein kann, betätigbar ist.

Somit bietet die erfindungsgemäß vorgeschlagene Lösung nach Auswahl einer Hauptkomponente des Fördermoduls 50, deren Gehäuse 52 als Gehäuse für weitere Komponenten 80, 82, 86 und 90 dienende Kammern 64, 66, 68 beziehungsweise Einschübe ausbilden, den Vorteil, dass miteinander interagierende Komponenten wie z. B. der Betätigungsmagnet 86 und das Umschaltventil 70 ebenfalls die Exterieuranforderungen erfüllen können, da diese gegen Umwelteinflüsse, wie die eingangs aufgezählten Parameter Spritzwasser, Watwasser und Salze beziehungsweise Korrosion, ausreichend gekapselt und beständig geschützt sind. In der in Figur 2 dargestellten Ausführungsform sind die Exterieuranforderungen nur mit einem vergleichsweise hohen Aufwand zu erfüllen, da die dort an den Seiten 42, 44 des Trägerblocks 40 aufgenommenen Komponenten 26, 28, 30 den Umwelteinflüssen nahezu schutzlos ausgesetzt sind.

## Patentansprüche

1. Fördermodul (50) für ein Dosiersystem zum Einbringen eines Reduktionsmittels in den Abgastrakt einer Verbrennungskraftmaschine, mit einem Gehäuse (52), in dem Komponenten (70, 80, 82, 84, 86) untergebracht sind, **dadurch gekennzeichnet, dass** in das als Spritzgussbauteil gefertigte Gehäuse (52) eine erste Kammer (64) zur Aufnahme eines Antriebes (80) sowie einer Pumpe (90) aufweist sowie eine weitere, zweite Kammer (66) zur Aufnahme der Heizung (82) und mindestens eine weitere dritte Kammer (68) zur Aufnahme eines Betätigungsmagneten (86) umfasst.

2. Fördermodul (50) gemäß Anspruch 1, **dadurch gekennzeichnet, dass** das Gehäuse (52) als Spritzgießbauteil im Kunststoffspritzgießverfahren oder im Aluminiumspritzgießverfahren hergestellt ist.

3. Fördermodul (50) gemäß Anspruch 1, **dadurch gekennzeichnet, dass** in das Gehäuse (52) in einer Wärmeleitung und Wärmestrahlung begünstigenden Position die Heizung (82) entweder eingespritzt ist oder in der gehäusezentrumsnah angeordneten zweiten Kammer (66) untergebracht ist.

4. Fördermodul (50) gemäß Anspruch 1, **dadurch gekennzeichnet, dass** elektrisch zu kontaktierende Komponenten (80, 82, 86) nach der Montage in ihren entsprechenden Kammern (64, 66, 68) im Gehäuse (52) mit Steckerfahnen Gehäuseöffnungen (72) durchsetzen.

5. Fördermodul (50) gemäß Anspruch 1, **dadurch gekennzeichnet, dass** mindestens eine Betätigungsmimik (92, 84) zwischen einem im Gehäuse (52) aufgenommenen Umschaltventil (70) und mindestens einem innerhalb mindestens einer Kammer (68) aufgenommenen Betätigungsorgan (86) durch das Gehäuse (52) nach außen gekapselt ist.

6. Fördermodul (50) gemäß Anspruch 1, **dadurch gekennzeichnet, dass** innerhalb des Gehäuses (52) mindestens eine mindestens zwei Kammern (64, 66, 68) voneinander trennende, einen Wärmetransport durch Wärmeleitung begünstigende Innenwand (56) verläuft.

7. Fördermodul (50) gemäß Anspruch 1, **dadurch gekennzeichnet, dass** die mindestens eine im Innenraum des Gehäuses (52) ausgebildete Kammer (64, 66, 68) mittels eines Deckelelementes verschließbar ist, welches an einer Zugangsöffnung zu der mindestens einen Kammer (64, 66, 68) entweder angeclipst, verschraubt oder stoffschlüssig angebracht wird.

8. Fördermodul (50) gemäß Anspruch 1, **dadurch gekennzeichnet, dass** das Gehäuse (52) einen Zulauf (18, 94) sowie mindestens einen Rücklauf (20, 96) für in den Abgastrakt der Verbrennungskraftmaschine einzubringendes Reduktionsmittel aufweist.

9. Fördermodul (50) gemäß Anspruch 1, **dadurch gekennzeichnet, dass** das Gehäuse (52) ein als 4/2-Ventil ausgebildetes Umschaltventil (70), in einer ersten Kammer (64) einen elektrischen Antrieb (80) sowie eine Pumpe (90), in einer zweiten Kammer (66) eine Heizung (82) sowie in einer dritten Kammer (68) einen, das Umschaltventil (70) betätigenden Betätigungsmagneten (86) aufnimmt, wobei elektrisch zu kontaktierende Komponenten (80, 82, 86) über elektrische Kontakte (74, 76, 78) an einer Gehäuseaußenwand (54), einem Deckel (58) oder einer Bodenfläche (60) des Gehäuses (52) kontaktiert sind.

## Claims

1. Delivery module (50) for a dosing system for introducing a reducing agent into the exhaust section of an internal combustion engine, having a housing (52) in which components (70, 80, 82, 84, 86) are accommodated, **characterized in that** the housing (52), which is produced as an injection-moulded component, has a first chamber (64) for holding a drive (80) and a pump (90) and comprises a further, second chamber (66) for holding the heating means (82), and at least one further, third chamber (68) for holding an actuating magnet (86).

2. Delivery module (50) according to Claim 1, **characterized in that** the housing (52) is produced as an injection-moulded component in a plastic injection-moulding process or in an aluminium injection-moulding process.

3. Delivery module (50) according to Claim 1, **characterized in that** the heating means (82) is either injection-moulded into the housing (52) in a position which promotes heat conduction and heat radiation, or accommodated in the second chamber (66) which is arranged close to the centre of the housing.

4. Delivery module (50) according to Claim 1, **characterized in that** components (80, 82, 86) to be electrically contacted, after being mounted in their corresponding chambers (64, 66, 68) in the housing (52), extend with terminal pins through housing openings (72).

5. Delivery module (50) according to Claim 1, **characterized in that** at least one actuating mechanism (92, 84) is encapsulated to the outside by the housing (52) between a switching valve (70), which is held in the housing (52), and at least one actuating member (86) which is held within at least one chamber (68).

6. Delivery module (50) according to Claim 1, **characterized in that** at least one inner wall (56) which separates at least two chambers (64, 66, 68) from one another and which promotes heat transport by heat conduction runs within the housing (52).

7. Delivery module (50) according to Claim 1, **characterized in that** the at least one chamber (64, 66, 68) which is formed in the interior of the housing (52) can be closed off by means of a cover element which is either clipped, screwed or attached in a materially integral fashion to an access opening to the at least one chamber (64, 66, 68).

8. Delivery module (50) according to Claim 1, **characterized in that** the housing (52) has an inlet line (18, 94) and at least one return line (20, 96) for reducing agent to be introduced into the exhaust section of the internal combustion engine.

9. Delivery module (50) according to Claim 1, **characterized in that** the housing (52) holds a switching valve (70) designed as a 4/2 directional valve, holds an electric drive (80) and a pump (90) in a first chamber (64), holds a heating means (82) in a second chamber (66), and holds an actuating magnet (86) which actuates the switching valve (70) in a third chamber (68), with components (80, 82, 86) to be electrically contacted being contacted via electrical contacts (74, 76, 78) on a housing outer wall (54), on a cover (58) or on a base surface (60) of the housing (52).

## Revendications

1. Module de transfert (50) pour un système de dosage pour l'introduction d'un agent réducteur dans la branche de gaz d'échappement d'un moteur à combustion interne, comprenant un boîtier (52), dans lequel sont montés des composants (70, 80, 82, 84, 86), **caractérisé en ce que** le boîtier (52) fabriqué en tant que composant moulé par injection, présente une première chambre (64) pour recevoir un entraînement (80) ainsi qu'une pompe (90), ainsi qu'une deuxième chambre (66), supplémentaire, pour recevoir le chauffage (82) et au moins une troisième chambre (68), supplémentaire, pour recevoir un aimant de commande (86).

2. Module de transfert (50) selon la revendication 1, **caractérisé en ce que** le boîtier (52) est fabriqué sous forme de composant moulé par injection dans un procédé de moulage par injection de plastique ou dans un procédé de moulage par injection d'aluminium.

3. Module de transfert (50) selon la revendication 1, **caractérisé en ce que** dans le boîtier (52), dans une position favorisant la conduction thermique et le rayonnement thermique, un chauffage (82) est soit injecté soit monté dans la deuxième chambre (66) disposée à proximité du centre du boîtier.

4. Module de transfert (50) selon la revendication 1, **caractérisé en ce que** des composants (80, 82, 86) à contacter électriquement traversent des ouvertures du boîtier (72) après le montage dans leurs chambres correspondantes (64, 66, 68) dans le boîtier (52) avec des fanions d'enfichage.

5. Module de transfert (50) selon la revendication 1, **caractérisé en ce qu'**au moins une mimique de commande (92, 84) entre une soupape d'inversion (70) reçue dans le boîtier (52) et au moins un organe de commande (86) reçu à l'intérieur d'au moins une chambre (68) est encapsulée vers l'extérieur à travers le boîtier (52).

6. Module de transfert (50) selon la revendication 1, **caractérisé en ce qu'**à l'intérieur du boîtier (52) s'étend au moins une paroi intérieure (56) séparant l'une de l'autre au moins deux chambres (64, 66, 68), favorisant un transport thermique par conduction thermique.

7. Module de transfert (50) selon la revendication 1, **caractérisé en ce que** l'au moins une chambre (64, 66, 68) réalisée dans l'espace interne du boitier (52) peut être fermée au moyen d'un élément de couvercle, qui est soit enclipsé, soit vissé, soit monté par engagement par coopération de forme sur l'au moins une chambre (64,66, 68).

8. Module de transfert (50) selon la revendication 1, **caractérisé en ce que** le boîtier (52) présente une entrée (18, 94), ainsi qu'au moins un retour (20, 96) pour l'agent réducteur à introduire dans la branche de gaz d'échappement du moteur à combustion interne.

9. Module de transfert (50) selon la revendication 1, **caractérisé en ce que** le boîtier (52) reçoit une soupape d'inversion (70) réalisée sous forme de soupape à 4/2 voies, dans une première chambre (64) un entraînement électrique (80) ainsi qu'une pompe (90), dans une deuxième chambre (66) un chauffage (82) et dans une troisième chambre (68) un aimant de commande (86) actionnant la soupape d'inversion (70), des composants (80, 82, 86) à contacter électriquement étant mis en contact par le biais de contacts électriques (74, 76, 78) sur une paroi extérieure du boîtier (54), un couvercle (58) ou une surface de fond (60) du boîtier (52).
